# EUROPÄISCHE PATENTSCHRIFT

(11) **EP 1 611 424 B1**
(45) Veröffentlichungstag und Bekanntmachung des Hinweises auf die Patenterteilung: **16.02.2011**
(21) Anmeldenummer: 04725343.0
(22) Anmeldetag: 02.04.2004
(51) Int. Cl.: G01M 3/24

(54) **EINRICHTUNG ZUR ERKENNUNG UND NÄHERUNGSWEISEN ORTUNG EINES LECKS IN EINEM TRINKWASSERVERSORGUNGSNETZ**
DEVICE FOR DETECTING AND APPROXIMATELY LOCALISING A LEAKAGE IN A DRINKING WATER SUPPLY NETWORK
DISPOSITIF POUR IDENTIFIER ET LOCALISER APPROXIMATIVEMENT UNE FUITE DANS UN RESEAU D'ALIMENTATION EN EAU POTABLE

(30) Priorität: 07.04.2003 DE 10315987
(43) Veröffentlichungstag der Anmeldung: 04.01.2006
(73) Patentinhaber: Riehle, Rainer, 74243 Langenbrettach (DE)
(72) Erfinder: Riehle, Rainer, 74243 Langenbrettach (DE)
(74) Vertreter: Lutz, Johannes Dieter
(86) Internationale Anmeldenummer: PCT/EP2004/003502
(87) Internationale Veröffentlichungsnummer: WO 2004/090498

(56) Entgegenhaltungen:
- DE-A- 19 528 287
- DE-U- 20 220 270

## Beschreibung

Die Erfindung betrifft eine Einrichtung zur Erkennung und näherungsweisen Ortung eines Lecks in einem Trinkwasserversorgungsnetz mit einer Mehrzahl von ADL-Einheiten (akustischen Daten-Loggem) zur Ermittlung von akustischen Daten, die für Leckgeräusche charakteristisch sind und zur Speicherung der Daten für eine Auswertung im Sinne der Leckerkennung in einer Zentrale, in der eine weitergehende Auswertung der Daten durchführbar ist, wobei die ADL-Einheiten (14) als Analogsignale anfallende Mikrofonsignale in ein für die Verarbeitung zur Leckerkennung geeignetes digitales Format wandeln.

Eine Einrichtung dieser Art ist durch die DE 39 11 648 C2 bekannt. Bei der bekannten Einrichtung werden in den Schallsensoren (Datenloggern) generierte akustische Daten über ein Netzwerk, das als ein leitungsgebundenes Datenübertragungsnetz ausgebildet ist, zu einer Auswertungszentrale übertragen. Da ein solches Übertragungsnetz in aller Regel nicht zur Verfügung steht und daher zusammen mit dem Installieren der Schallsensoren verlegt werden muss, ist die bekannte Einrichtung nur mit einem unverhältnismäßig hohen Aufwand realisierbar.

Dies gilt sinngemäß auch für eine durch die DE 195 23 710 A1 bekannte Vorrichtung zur Fehlererkennung bei Fernwärme-Leitungsrohren, bei der die Fehlererkennung anhand der Reflexion elektrischer Testimpulse an fehlerbedingten Inhomogenitäten einer elektrischen Testleitung erfolgt.

Zwar ist es auch bekannt (DE 195 28 287 A1) eine Abfrage der in solchen ADL-Einheiten gespeicherten Signaldaten dadurch zu realisieren, dass diese Schallsensor-Einheiten mit Sendern bestückt sind, die über eine relativ kurze Distanz eine drahtlose Datenübertragung ermöglichen und diese Sender mit einem Empfangsfahrzeug nacheinander abzufragen und so die Daten zu sammeln, die danach in der Zentrale ausgewertet werden können.

Nachteilig ist hierbei jedoch, dass ein erheblicher Zeitaufwand erforderlich und eine zeitnahe Auswertung der Daten nicht möglich ist. Meist muss auch eine Beschränkung hinsichtlich der Senderleistung hingenommen werden, wenn die Realisierung der Datenübertragung per Funk noch kostengünstig erfolgen können soll.

Aufgabe der Erfindung ist es daher, eine Einrichtung der eingangs genannten Art dahingehend zu verbessern bzw. zu schaffen, die einerseits mit geringerem technischem Aufwand realisierbar ist gleichwohl mit geringeren Verzögerungen zwischen Datenerzeugung und Datenverarbeitung der gespeichterten Daten auskommt, und demgemäß signifikante Verringerungen von Lecklaufzeiten - Wasserverlusten - ermöglicht.

Diese Aufgabe wird gemäß dem kennzeichnenden Teil des Patentanspruchs 1 durch eine Gestaltung der Einrichtung dahingehend gelöst, dass zur Datenübertragung von den Schallsensoren zur Zentrale drahtlose Übertragungskanäle vorgesehen sind, wobei die Datenübertragung von den Schallsensoren zur Zentrale jeweils über mindestens einen weiteren Schallsensor erfolgt und die akustischen Daten in vorgebenen oder vorgebbaren Zeitfenstern zur Zentrale übertragbar und mittels dieser einer selbsttätigen Auswertung unterwerfbar sind.

Hieraus ergeben sich zumindest die folgenden technischen Vorteile der erfindungsgemäßen Einrichtung:
1. Dadurch, dass die Schallsensoren sowohl die Fähigkeit zur Aussendung von Daten als auch die Fähigkeit zum Empfang und zur Speicherung von Daten haben, die von weiteren Schallsensoren generiert und ausgesandt werden, bildet sich im Leckerkennungsbetrieb der Anlage ein Datennetz, in dem an mehreren verschiedenen Stellen die von einer Mehrzahl von Schalldetektoren generierte Information gespeichert ist. Dies hat zur Folge, dass die Einrichtung eine sehr zuverlässige Leckerkennung vermitteln kann, da ein Ausfall einzelner Detektoren sich nicht dahingehend auswirkt, dass die durch ein Leck erzeugte Geräusch-Information verloren geht. Die Datenübertragungskette zwischen den Detektoren und der Zentraleinheit wird dadurch nicht unterbrochen.
2. Der installationstechnische Aufwand ist im Vergleich zu einem leitungsgebundenen Übertragungskanal erheblich reduziert.
3. Durch den automatischen Sende- und Verarbeitungsbetrieb wird Personal gespart.
4. Im Ergebnis werden deutlich reduzierte Leck-Laufzeiten erreicht.

In einer bevorzugten Gestaltung der erfindungsgemäßen Einrichtung werden die Daten von den Schallsensoren (AD-Loggern) zu einer impulsformenden und -regenerierenden Relaisstation übertragen und von dieser zur Auswertungszentrale weitergeleitet. Eine derartige Relaisstation kann in der Weise realisiert sein, dass sie eine Vor-Verarbeitung der Daten durchführt, dahingehend, dass sie diejenigen Daten, die in einer Hauptmesszeit ermittelt werden, z. B. zwischen 2.00 und 4.00 Uhr nachts an die Zentrale weiterleiten, die die inhaltliche Auswertung der Daten durchführt - Leckerkennung und ungefähre Ortung.

Die Relaisstation ist auch dahingehend nutzbar, dass in der so genannten Nebenzeit, d. h. der Zeit außerhalb der Kernmesszeit auftretende Signale ebenfalls zur Zentrale weitergeleitet werden, wenn solche "Nebensignale" darauf hin deuten, dass ein Leck auftritt. Diese Betriebsart ist für den Fall denkbar und auch vorgesehen, dass die Schallsensor-Einheiten nur in einem Sendebetrieb arbeiten können, d. h. unter der Nebenbedingung, dass ein Sendetakt vorgesehen ist, der eine geordnete Sendung der Datenlogger-Signale ermöglicht. Besonders zweckmäßig ist es jedoch, wenn die Schallsensoren und deren Speichereinheiten auch einem Empfangsbetrieb zugängig sind, so dass eine von der Relaisstation oder der Zentrale aus gesteuerte Abfrage der Daten möglich ist.

In spezieller Gestaltung ist es dann auch möglich, von der Zentrale aus einzeine Schallsensoren anzusprechen.

Eine derartige Möglichkeit ist auch in der Weise implementierbar, dass die Relaisstation von der Zentrale aus ansprechbar ist, wobei die Relaisstation die akustischen Daten sensorbezogen speichert.

Besonders vorteilhaft kann es auch sein, wenn eine Übertragung der gespeicherten Daten von Schallsensor zu Schallsensor möglich ist, derart, dass ein "weist entfernter" Schallsensor die in ihm gespeicherten Daten auf einen nächsten Schallsensor überträgt und dieser die empfangenen und die von ihm selbst generierten und gespeicherten Daten weiterleitet und so weiter, bis nach einer Übertragung über eine Vielzahl von Schallsensoreinheiten hinweg die Daten der Übertragungskette insgesamt zu einer Relaisstation gelangen, die die weitere Übertragung zur Zentrale hin vermittelt und auch den Datenverkehr mit den weiteren Sensoren.

Möglich ist auch eine Betriebsweise einzelner oder mehrerer Schallsensoren einer Übertragungslinie dahingehend, dass diese die Daten kapazitätsgerecht bündeln, d. h. die Daten paketweise weiterleiten, bevor sie ihre eigenen Daten hinzufügen oder separat weitergeben.

Weitere Einzelheiten der erfindungsgemäßen Einrichtung ergeben sich aus der nachfolgenden Erläuterung von Ausführungsbeispielen anhand der Zeichnung. Es zeigen:
- Fig. 1: eine schematisch vereinfachte Darstellung einer erfindungsgemä- ßen Einrichtung
- Fig. 2: eine schematisch vereinfachte Darstellung eines Ausführungsbei- spiels mit Datenübertragung von Schallsensor zu Schallsensor und
- Fig. 3: ein Ausführungsbeispiel mit vernetzten Schallsensoren, zur Ver- einfachung ohne Darstellung der Wasser-Versorgungsleitungen.

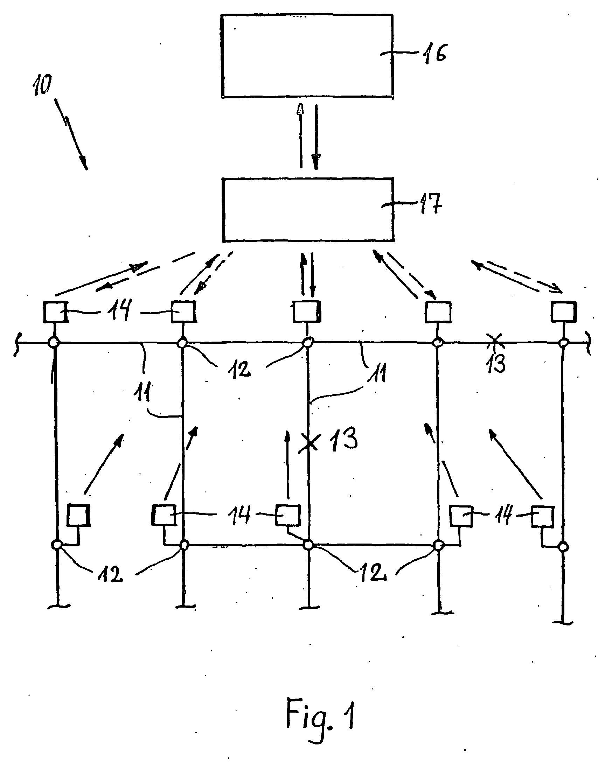

Das in der Fig. 1 insgesamt mit 10 bezeichnete Trinkwasserversorgungsnetz umfasst eine Vielzahl von Leitungsabschnitten 11, die sich jeweils zwischen zwei Hydranten 12 erstrecken, mittels derer einander benachbarte Leitungsabschnitte gegeneinander absparbar bzw. im Sinne einer erwünschten "Versorgungs" - Topologie miteinander kommunizierend verbindbar sind, so dass beispielsweise sternförmige oder rechenförmige oder maschenförmige Leitungstopologien realisierbar sind. Um in einem solchen Netz 10 das Auftreten eines Lecks feststellen und dieses mindestens ungefähr lokalisieren zu können, ist mindestens eine Teilzahl der Hydranten 12 mit Schallsensoren 14 bestückt, die für die im Trinkwasser-Versorgungsnetz 10 ausbreitungsfähigen Schallwellen, die durch das ausströmende Wasser angeregt werden, charakteristische elektrische Ausgangssignale erzeugen, aus deren kombinierter Auswertung nach Schalldruckpegel, Frequenz der angeregten Schallwellen und gegebenenfalls der zeitlichen Korrelation solcher Signale sowohl auf das Vorhandensein einer oder mehrerer Leckstellen 13 als auch zumindest näherungsweise auf deren Anordnung geschlossen werden kann.

Die Schallsensoren 14 sind entlang der durch die Leitungsabschnitte 11 gebildeten "Längs" - und Quer-Leitungen des Trinkwasser-Versorgungsnetzes 10 - zweckmäßigerweise äquidistant - so angeordnet, so dass ihre Empfindlichkeit ausreicht, die in den benachbarten Leitungsabschnitten auftretenden Geräusche mit einem hineinreichenden Ausgangssignalpegel zu erfassen.

Für das zur Erläuterung gewählte Ausführungsbeispiel sei angenommen, dass sämtliche Hydranten mit Schallsensoren bestückt sind.

Die Schallsensoren umfassen je ein Mikrofon, das heißt einen Schalldruckpegel-Spannungs-Wandler, der ein Spannungs-Ausgangssignal erzeugt, dessen Amplitude ein direktes Maß für den Schalldruckpegel ist, der vom jeweiligen Schallsensor erfasst wird. Die Schallsensoren 14 sind als so genannte akustische Datenlogger ausgelegt, die eine Vor Verarbeitung der akustischen Signale ermöglichen, derart, dass die akustischen Daten vorab in ein für eine Weiterverarbeitung geeignetes - digitales - Format gebracht werden, indem sie noch in den Sensor - Einheiten gespeichert werden, bevor diese Daten einer Verarbeitungszentrale 16 zugeleitet werden, die aus einer vergleichenden und/oder analysierenden Verarbeitung der Signale die LeckErkennung und/oder Leckortung letztlich vermittelt.

Die Datenübertragung der auszuwertenden akustischen Daten von den Schallsensoren zu der Zentraleinheit 16 erfolgt per Funk in drahtlosen Übertragungskanälen, entweder von den Schallsensoren direkt zu der Zentraleinheit 16 oder von den Schalsensoren 14 zu einer oder mehreren Relaisstationen 17 und von dieser erst zur Zentraleinheit 16, wobei die Relaisstation 17 eine Impulsform-Regenerierung der von den Schallsensoren 14 ihr zugesandten Datenimpulsen vermittelt und/oder auch eine Datenkompression und/oder eine weitere Vorauswertung der akustischen Daten vermitteln kann, bevor diese in der Zentrale 16 zur Leckerkennung ausgewertet werden.

Erforderlichenfalls sind mehrere Relaisstationen 17 vorgesehen, denen jeweils Gruppen von Schallsensoren 14 zugeordnet sind, deren Daten von den jeweiligen Relaisstationen zur Zentrale 16 geleitet werden.

Eine durch die Schallsensoren 14, eine oder mehrere Relaisstation(en) 17 und die zentrale Einheit 16 gebildete Einrichtung zur Leckerkennung in einem Trinkwasserversorgungsnetz kann zweckmäßigerweise so implementiert sein, dass von der Zentraleinheit 16 aus die in den einzelnen Schallsensor-Einheiten gespeicherten akustischen Daten in geordneter Folge zyklisch abgerufen und in einem vorgegebenen Zeittakt verarbeitet werden. Zweckmäßigerweise werden diejenigen Messungen, die für eine Leckerkennung herangezogen werden, in den frühen Morgenstunden eines Tages durchgeführt, in denen das Trinkwasser-Versorgungsnetz minimaler Gebrauchs-Belastung ausgesetzt ist und die Geräuschpegel innerhalb des Netzes niedrig sind.

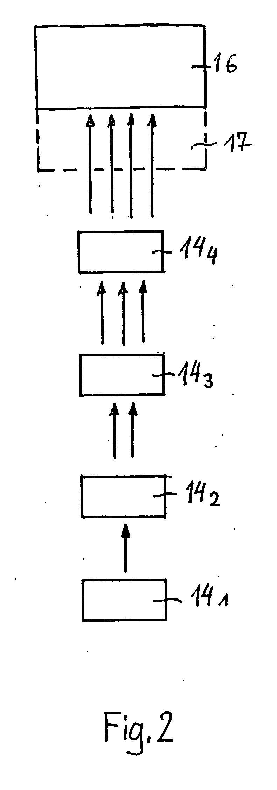

Bei der Gestaltung der Leckerkennungs-Einrichtung gemäß Fig. 2 ist eine Gestaltung des über mehrere Schallsensoren 14 hinweg zur Zentraleinheit 16 führenden drahtlosen Übertragungskanals dahingehend vorgesehen, dass die Geräuschsignaldaten von einem von der Zentraleinheit 16 am weitesten entfernt angeordneten Schallsensor 14₁ zunächst zu dem ihm nächstgelegenen Schallsensor gesendet werden. Dieser sendet seinerseits die vom entfernten Sensor 14 empfangenen Daten und die von ihm selbst generierten Daten an den wiederum noch näher zur Zentrale gelegenen Sensor 14₃ aus und dieser weiter zu einem geometrisch noch näher an der Zentrale gelegenen Sensor, usw., bis schließlich ein der Zentrale nächstgelegener Sensor die von ihm selbst generierten Geräuschsignaldaten und die insgesamt von ihm empfangen Daten schließlich an die Zentrale 16 weiterleitet, gegebenenfalls über eine Relaisstation 17. Ist nur eine solche Sensorkette vorhanden, kann die Relaisstation in die Zentrale 16 integriert oder in den dieser nächstgelegenen Sensor 14₄ integriert sein. Diese Gestaltung der Leckerkennungseinrichtung ist mit einem günstig geringen Kostenaufwand realisierbar. Es versteht sich, dass auch bei dieser Gestaltung der Einrichtung die Abfrage der Geräuschsignaldaten von der Zentrale her gesteuert sein kann.

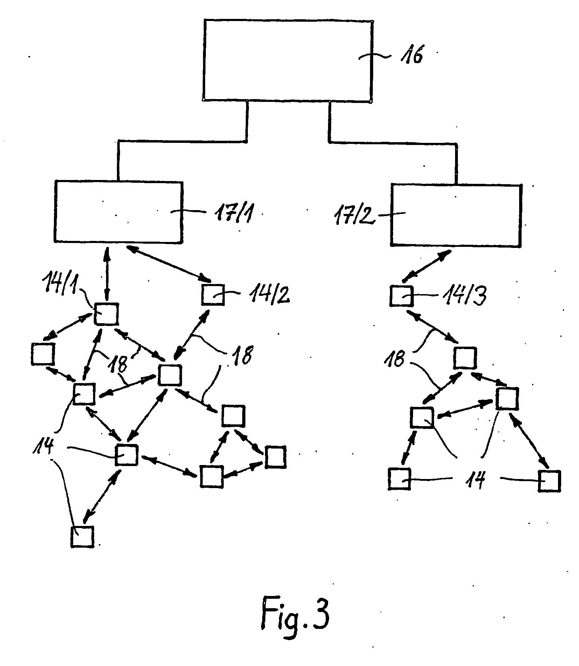

Zur Erläuterung einer weiteren Ausgestaltung einer erfindungsgemäßen Einrichtung zur Leckerkennung sei nunmehr auf die Fig. 3 Bezug genommen, in der eine Leckerkennungseinrichtung für ein Wasserversorgungsnetz lediglich durch eine schematisch vereinfachte Anordnung von Schallsensoren 14, einer Zentrale 16 und zweier Relaisstationen 17/1 und 17/2 repräsentiert ist. Die Versorgungsleitungen des Wasserversorgungsnetzes und dessen Hyd- - ranten sind der Einfachheit halber nicht dargestellt.

Für die Schallsensoren 14 ist die anhand der Fig. 2 geschilderte Ausbildung dahingehend vorausgesetzt, dass sie sowohl Daten aussenden als auch Daten empfangen können. Die möglichen Kommunikationskanäle sind durch Doppelpfeile 18 veranschaulicht.

Soweit ein Schallsensor innerhalb der Reichweite von weiteren Schallsensoren liegt, kann er deren Ausgangs-Signale empfangen, speichern und seinerseits wieder weiterleiten. Nur ein Teil der Schallsensoren, beim dargestellten Ausführungsbeispiel die Schallsensoren 14/1, 14/2 und 14/3 sind so angeordnet, dass ihre Signale die Relaisstation 17/1 bzw. 17/2 erreichen können, die ihrerseits als "oberirdische" Sende- und Empfangseinrichtungen über Datenleitungen oder über Funkstrecken mit der Zentrale 16 kommunizieren.

Dadurch dass die Schallsensoren 14 mindestens gruppenweise untereinander kommunizieren können, bildet sich im Überwachungsbetrieb selbsttätig ein Netz aus, in dem Akustik-Daten in mehreren Schallsensoren gespeichert werden. Diese sich gleichsam selbsttätig ergebende Redundanz hat zur Folge, dass einzelne Schallsensoren 14 ausfallen können, ohne dass die Lecküberwachung hierunter leidet. In einer typischen Auslegung eines solchen Netzes können beispielsweise 100 Detektoren zu einer Gruppe von mindestens teilweise untereinander vernetzten Einheiten zusammengefasst sein, die über relaisstationnahe Schallsensoren 14/1 und 14/2 bzw. 14/3 mit den zugeordneten Relaisstationen 17/1 bzw. 17/2 kommunizieren.

Es versteht sich, dass die Leck-Erkennungseinrichtung auch einzelne Schallsensoren haben kann, die "direkt" mit der Zentrale 16 kommunikationsfähig sind.

## Patentansprüche

1. Einrichtung zur Erkennung und näherungsweisen Ortung eines Lecks in einem Trinkwasserversorgungsnetz mit einer Mehrzahl von Schallsensoren (14) - akustischen Datenloggem - zur Ermittlung von akustischen Daten, die mit Leckgeräuschen verknüpft sind und Speicherung von Daten zur Auswertung in einer Zentrale (16), in der eine weitergehende Auswertung der Daten durchführbar ist, wobei die Schallsensoren (14) die Funktion von Speichern bzw. Vor-Verarbeitungseinheiten vermitteln, die die Leckgeräusch-Signale in ein für die Verarbeitung zur Leckerkennung geeignetes digitales Format wandeln, **dadurch gekennzeichnet, dass** zur Datenübertragung von den Schallsensoren (14) zur Zentrale (16) drahtlose Übertragungskanäle vorgesehen sind, wobei die Datenübertragung von den einzelnen Schallsensoren (14) zur Zentrale (16) jeweils über mindestens einen weiteren Schallsensor (14) erfolgt, und wobei die akustischen Daten in vorgegebenen oder vorgebbaren Zeitfenstem zur Zentrale (16) übertragbar und mittels dieser einer selbsttätigen Auswertung unterwerfbar sind.

2. Einrichtung nach Anspruch 1, **dadurch gekennzeichnet, dass** eine Relaisstation (17) vorgesehen ist, mittels derer von den Schallsensoren (14) Daten zur Zentrale (16) übertragbar sind.

3. Einrichtung nach Anspruch 1 oder Anspruch 2, **dadurch gekennzeichnet, dass** Übertragungskanäle vorgesehen sind, innerhalb derer die gespeicherten Daten innerhalb einer Gruppe von Schallsensoren (14) von Schallsensor zu Schallsensor übertragen und erst von einem der Relaisstation (17) oder der Zentrale (16) nächstgelegenen Schallsensor zu der Relaisstation (17) bzw. der Zentrale (16) gesandt werden.

4. Einrichtung nach einem der Ansprüche 1 bis 3, **dadurch gekennzeichnet, dass** die Relaisstation (17) und/oder die Zentrale (16) eine Weiterleitung und Verarbeitung der Datensignale lediglich in einer Kemzeit (z.B. zwischen 2.00 und 4.00 Uhr nachts) vermittelt.

5. Einrichtung nach Anspruch 4, **dadurch gekennzeichnet, dass** außerhalb der Kemzeit auftretende akustische Signale (ebenfalls der Zentraleinheit) als Vergleichssignale zugeleitet werden.

6. Einrichtung nach einem der Ansprüche 2 bis 5, **dadurch gekennzeichnet, dass** die Schallsensoren von der Relaisstation (17) und/oder direkt von der Auswertungszentrale (16) zur Datenübergabe ansteuerbar sind.

## Claims

1. Device for detecting and approximately locating a leak in a drinking water supply network, having a plurality of sound sensors (14) - acoustic data loggers - for determining acoustic data which are linked to leak noises and for storing data for evaluation in a control centre (16) in which advanced evaluation of the data can be carried out, the sound sensors (14) performing the function of memories and pre-processing units which convert the leak noise signals into a digital format suitable for processing in order to detect leaks, **characterized in that** wireless transmission channels are provided for the purpose of transmitting data from the sound sensors (14) to the control centre (16), data being transmitted from the individual sound sensors (14) to the control centre (16) via at least one further sound sensor (14) in each case, and the acoustic data being able to be transmitted to the control centre (16) in predefined or predefinable time windows and being able to be subjected to automatic evaluation using the control centre.

2. Device according to Claim 1, **characterized in that** a relay station (17) is provided and can be used to transmit data from the sound sensors (14) to the control centre (16).

3. Device according to Claim 1 or Claim 2, **characterized in that** transmission channels are provided inside which the stored data are transmitted from sound sensor to sound sensor within a group of sound sensors (14) and are only transmitted to the relay station (17) or to the control centre (16) by a sound sensor closest to the relay station (17) or the control centre (16).

4. Device according to one of Claims 1 to 3, **characterized in that** the relay station (17) and/or the control centre (16) forward(s) and process(es) the data signals only in a core time (for example between 2.00 and 4.00 am).

5. Device according to Claim 4, **characterized in that** acoustic signals occurring outside the core time are supplied (likewise to the central unit) as comparison signals.

6. Device according to one of Claims 2 to 5, **characterized in that** the sound sensors can be controlled by the relay station (17) and/or directly by the evaluation control centre (16) for the purpose of transferring data.

## Revendications

1. Dispositif pour identifier et localiser approximativement une fuite dans un réseau d'alimentation en eau potable avec une pluralité de capteurs acoustiques (14) - enregistreurs de données acoustiques - pour déterminer des données acoustiques liées à des bruits de fuite et mémoriser des données à analyser dans une centrale (16) dans laquelle une analyse continue des données peut être réalisée, les capteurs acoustiques (14) transmettant la fonction à des ordinateurs ou à des unités de prétraitement qui transforment les signaux de bruit de fuite en un format numérique adapté au traitement de l'identification de fuite, **caractérisé en ce que** pour transmettre des données des capteurs acoustiques (14) à la centrale (16), des canaux de transmission sans fil sont prévus, la transmission de données se produisant des différents capteurs acoustiques (14) à la centrale (16) respectivement par l'intermédiaire d'au moins un autre capteur acoustique (14) et les données acoustiques pouvant être transmises à la centrale (16) pendant un laps de temps préalablement prévu ou prédéfini et être soumises par son intermédiaire à une analyse automatique.

2. Dispositif selon la revendication 1, **caractérisé en ce qu'**une station relais (17) est prévue à l'aide de laquelle les données provenant des capteurs acoustiques (14) peuvent être transmises à la centrale (16).

3. Dispositif selon la revendication 1 ou la revendication 2, **caractérisé en ce que** des canaux de transmission sont prévus à l'intérieur desquels les données mémorisées sont transmises, à l'intérieur d'un groupe de capteurs acoustiques (14), de capteur acoustique en capteur acoustique et sont envoyées d'abord à la station relais (17) ou à la centrale (16) par un capteur acoustique proche de la station relais (17) ou de la centrale (16).

4. Dispositif selon l'une quelconque des revendications 1 à 3, **caractérisé en ce que** la station relais (17) et/ou la centrale (16) ne transmettent une transmission et un traitement des signaux de données que pendant une fourchette de temps (par exemple entre 2h et 4h du matin).

5. Dispositif selon la revendication 4, **caractérisé en ce que** les signaux acoustiques survenant en dehors de la fourchette de temps (également de l'unité centrale) sont transmis pour servir de signaux de comparaison.

6. Dispositif selon l'une quelconque des revendications 2 à 5, **caractérisé en ce que** les capteurs acoustiques peuvent être commandés par la station relais (17) et/ou directement par la centrale d'analyse (16) pour la transmission des données.
